# EUROPEAN PATENT SPECIFICATION

(11) **EP 3 649 047 B1**
(45) Date of publication and mention of the grant of the patent: **12.10.2022**
(21) Application number: 18902540.6
(22) Date of filing: 06.07.2018
(51) Int. Cl.: B64D 1/02, B64C 3/10, B64C 29/00, B64C 39/02, B64C 39/08

(54) **AUTONOMOUS UNMANNED AERIAL VEHICLE**
AUTONOMES UNBEMANNTES LUFTFAHRZEUG
VÉHICULE AÉRIEN SANS PILOTE AUTONOME

(30) Priority: 06.07.2017 TR 201710000
(43) Date of publication of application: 13.05.2020
(73) Proprietor: Istanbul Teknik Universitesi, 34469 Istanbul (TR); Mitos Mikrodalga Goruntuleme Sistemleri Muhendisli, Atasehir/Istanbul (TR)
(72) Inventor: CANLI, Guray Ali, Kadikoy/Istanbul (TR); AKDUMAN, Ibrahim, 34469 Istanbul (TR); KURTOGLU, Ismail, Atasehir/Istanbul (TR); CAYOREN, Mehmet, 34469 Istanbul (TR); YAVUZ GUNDOGDU, Pelin, Kag thane/ Istanbul (TR); OZKOL, Ibrahim, Istanbul (TR); ERCAN, Hasan, Ferikoy Sisli/Istanbul (TR); TAMYUREK, Muhammet Tarik, Santa Barbara, CA 93106 (US)
(74) Representative: Berkkam, Ayfer
(86) International application number: PCT/TR2018/050352
(87) International publication number: WO 2019/147196

(56) References cited:
- EP-A1- 1 384 662
- EP-A1- 1 396 423
- CN-A- 106 828 900
- JP-A- 2017 061 174
- US-A- 5 516 060
- US-A1- 2013 206 915
- US-B1- 6 550 715

## Description

### Technical Field

The invention is related to an autonomous unmanned aerial vehicle for land, sea and air use.

The invention is more specifically related to an unmanned aerial vehicle which can vertically take off and land, fly with fixed wings and stay in the air silently for a long time by means of a balloon inflated behind it.

### Prior Art

At present manned/unmanned aerial vehicles comprise vehicles with rotary blades (helicopter), vehicles with fixed wings (airplanes) and balloons. They can be manned or unmanned, and those classified as fixed wing and balloon type air vehicles which can also fly without an engine.

Unmanned aerial vehicle (UAV), commonly known as drone (ground-controlled aerial vehicle) is a kind of airplane controlled by a remote control. Unmanned aerial vehicles are divided into two categories: The first one are those remotely controlled, and the second one are those which can automatically move according to a certain flight plan. Previously intended for exploration, unmanned aerial vehicles are also used for many assault missions at present.

Various developments have been carried out in the art in relation with unmanned aerial vehicles.

The European patent document EP1396423 A1 in the prior art describes VTOL aircraft which is comprising a first and a second ducted rotor (1, 2) positioned at the ends (8, 9) of a vertical fuselage (3) and whose propellers (4, 6) are driven to rotate in mutually opposite directions. Control flaps (13) for orientation and transverse flight are operatively associated at least to the lower ducted rotor (2). The VTOL aircraft cannot vertically take off and land, fly with fixed wings and stay in the air silently for a long time by means of a balloon inflated behind it.

The United States patent document US2013206915 in the prior art describes an unmanned aerial vehicle which can vertically take off and land. The aerial vehicle comprises an upper drive train which provides vertical thrust and which can be adjusted according to three axes, single or counter-rotating propeller, central body with 3D articulation at a variable flexibility level to realize stabilization of the vehicle's configuration and support function, and a balloon installed in the center of the upper drive train. This balloon is inflated with helium or hydrogen gas. The vertical rise of the drive unit is provided by the thrust generated by the upper drive train and the lower drive train. The vertical rise of the drive unit is provided by the thrust generated by the upper drive train which is an engine blade or turbine or spiral turbine, and the lower drive train. The articulation function with 3D ball enables changing direction of the drive trains to allow for going towards a certain direction. The International patent document WO2014076403 in the prior art describes an aerial vehicle which comprises a body extending through a longitudinal main axis, two wings on both sides of the body, and two drive units. In the invention, the angle between the front edge of the wings and the long edge is equal to 90°. In other words, the wings have a triangular form in the aerodynamic flight position. The end of each wing's longitudinal edge creates a leg which rests on the vehicle. Besides, the wings comprise an interlocking mechanism to fix the wings on the body during the aerodynamic flight position.

The International patent document WO2017043980 in the prior art describes an unmanned aerial vehicle. The rotor mechanism of the invention comprises a first rotation axis and a first propeller connected to the engine, and a second propeller connected to the second engine. The length of the second propeller is smaller than that of the first propeller.

The US patent document US2008006743 in the prior art describes an unmanned aerial vehicle which runs on hydrogen. The aerial vehicle may include all combined or partially combined structural properties for lightness and resistance and wide wing clearances compared to the body (3.0 or larger). According to one embodiment of the airplane, one or more internal combustion engines arc used for burning hydrogen; each engine runs a propeller. The hydrogen fuel is stored as a cryogenic liquid in the containers on the body, and it is evaporated in a heat exchanger before being charged to an internal combustion engine.

The Turkish patent document 2017/05836 of the prior art describes internal combustion explosion engine primarily and fundamentally for unmanned aerial vehicles as well as any vehicles, generators, compressors and pumps. The mechanical power transmission organs are simplified and made lighter with the engine included in the invention.

However, unmanned aerial vehicles with fixed wings cannot stay in the air for a long time and they always need to move. They cannot stay in a suspended position in the air like a helicopter or balloon and they need a track for take-off and landing.

Multicopters, among unmanned aerial vehicles, can vertically take off and land, move in three axes, take off, fly and stay in the air by means of the air generated by the propellers connected to the engine(s). These systems, which are generally used with fixed angle propellers, move with the lifting force generated by the engines and the generated rotation force. However, the time for staying in the air is very short for multicopters and they have very limited load bearing capacities and they fly at very low altitudes.

Another unmanned aerial vehicle which is a balloon, moves slowly and it cannot remain constant at the desired point without anchoring due to the effect of the wind. It is easy to identify, shoot/take down balloons at low altitude and they have short ranges and it is difficult to control them.

In order to resolve the foregoing problems, the invented double propeller, engine and balloon containing autonomous unmanned aerial vehicles are required to be developed.

### Objectives and Brief Description of the Invention

The objective of this invention is to provide an unmanned aerial vehicle which can vertically take off and land, fly with fixed wings and stay in the air silently for a long time my means of a balloon inflated behind it.

Another objective of this invention is to provide unmanned aerial vehicles which do not need a track for take-off and landing.

Another objective of this invention is to provide an unmanned aerial vehicle with an eco-friendly engine, which consumes hydrogen as fuel.

Said objectives are achieved by an unmanned aerial vehicle as per claim 1.

The autonomous unmanned aerial vehicle rises with an internal combustion engine, and after reaching the target point, it can stay in the air for a long period of time and silently by means of the electrical engine and the balloon. Detailed images can be taken during this period. The vehicle which completes its duty, ejects the inflated balloon and begins landing.

### Detailed Description of the Invention

The unmanned aerial vehicle provided to achieve the objective of this invention is shown in the attached figures.

According to the figures:
**Figure 1****:** is a front view of unmanned aerial vehicle subject to the invention during the takeoff position.
**Figure 2****:** Perspective view of the position of the unmanned aerial vehicle subject to the invention before being positioned at a lateral axis.
**Figure 3****:** Perspective view of the position of the aerial vehicle subject to the invention before being positioned at a lateral axis at a different angle.
**Figure 4****:** Lateral view of the unmanned aerial vehicle subject to the invention while flying at a lateral axis.
**Figure 5****:** Lateral schematic view of the unmanned aerial vehicle subject to the invention when the balloon is inflated.
**Figure 6****:** Lateral schematic view of the unmanned aerial vehicle subject to the invention when the balloon is ejected.
**Figure 7****:** Lateral view of the unmanned aerial vehicle subject to the invention when it is floating at a lateral axis during landing.
**Figure 8****:** View of the position of the unmanned aerial vehicle subject to the invention before the landing position.
**Figure 9****:** Front view of the landing position of the unmanned aerial vehicle subject to the invention.
**Figure 10****:** Side view of the unmanned aerial vehicle having a moving wing while gliding on a lateral axis.
**Figure 11****:** Perspective view of the unmanned aerial vehicle having a moving wing while gliding on a lateral axis.

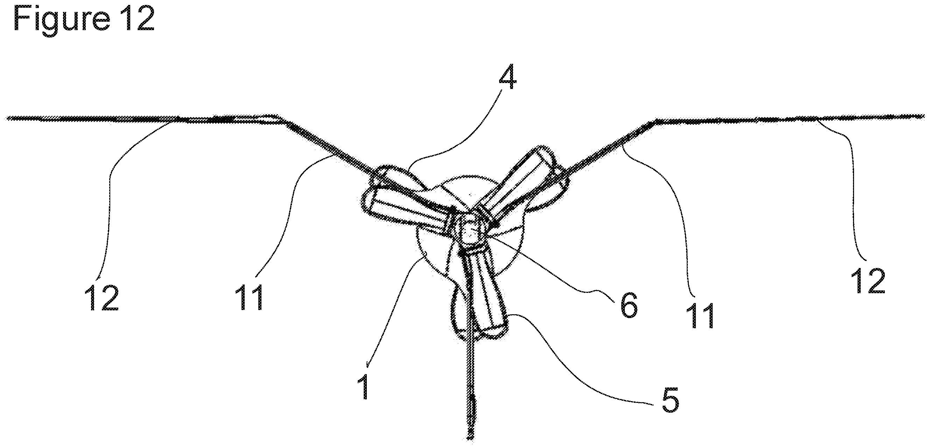

**Figure 12****:** Front view of the unmanned aerial vehicle having a moving wing while gliding on a lateral axis.

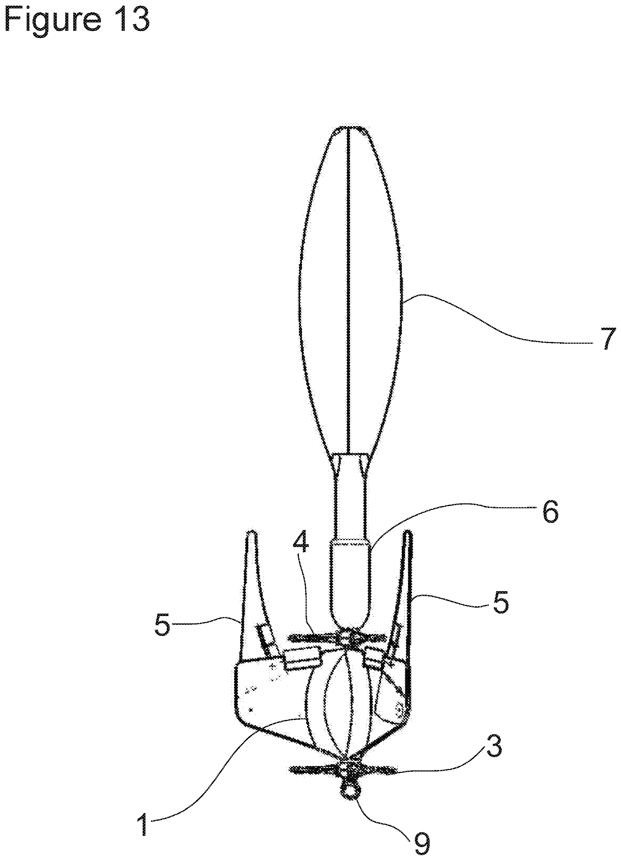

**Figure 13****:** Front schematic view of the unmanned aerial vehicle subject to the invention when the balloon is inflated.

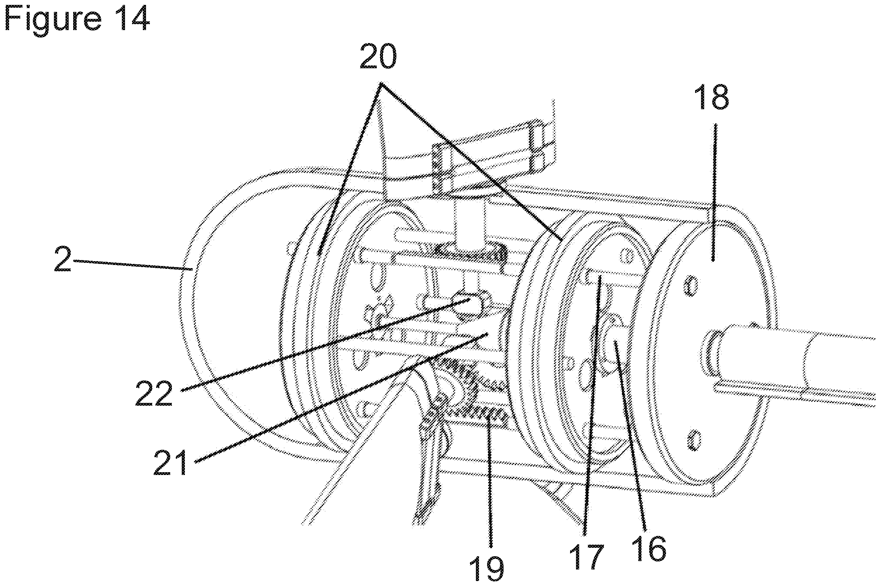

**Figure 14****:** View of the pitch control mechanism of the propellers on the unmanned aerial vehicle subject to the invention shown at a different angle.

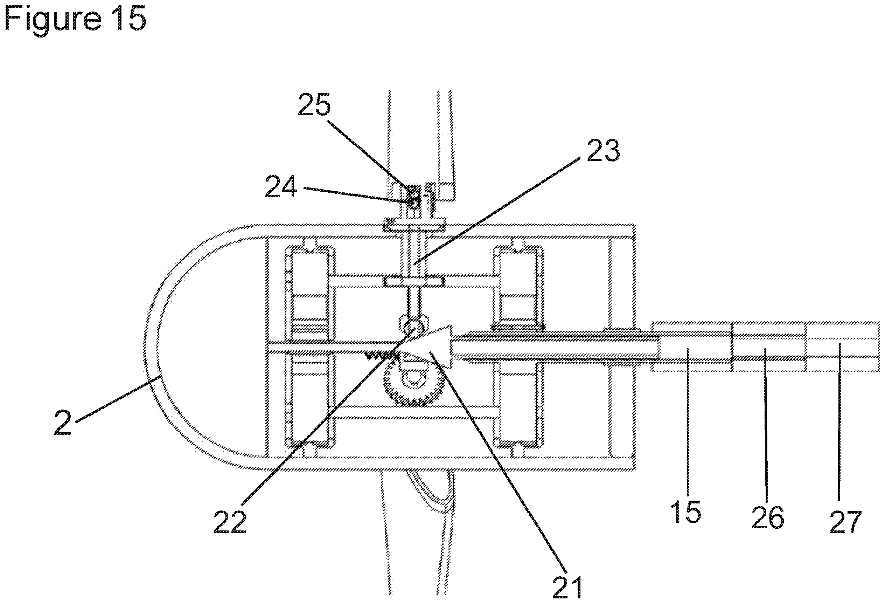

**Figure 15****:** Lateral schematic view of the pitch control mechanism of the propellers of the unmanned aerial vehicle subject to the invention.

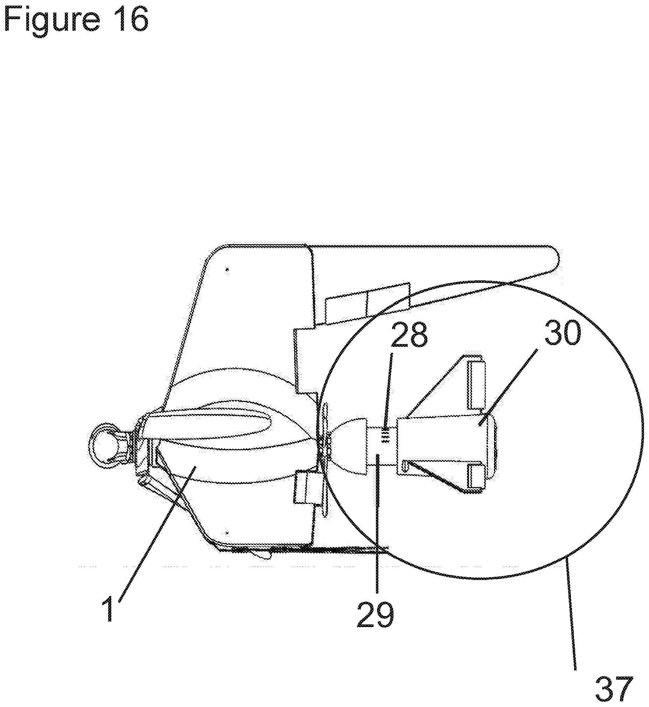

**Figure 16****:** Lateral view of the load balancing mechanism of the unmanned aerial vehicle subject to the invention while gliding on a lateral axis.

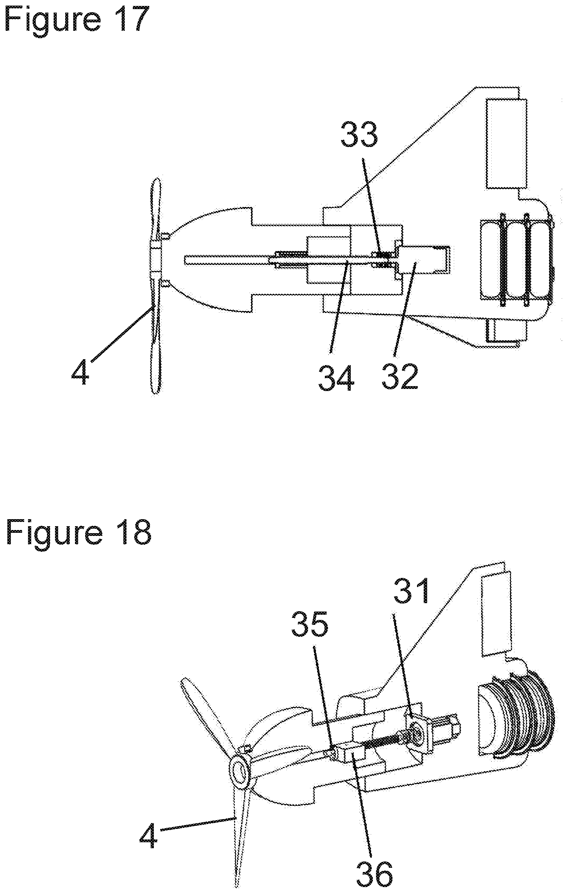

**Figure 17****:** Lateral schematic view of the load balancing mechanism of the unmanned aerial vehicle subject to the invention.
**Figure 18****:** Schematic view of the load balancing mechanism of the unmanned aerial vehicle subject to the invention from a different perspective.

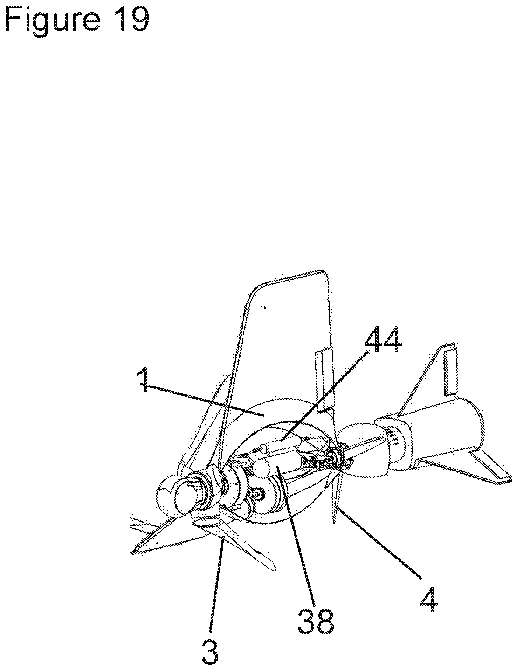

**Figure 19****:** Schematic view of the body of the unmanned aerial vehicle subject to the invention.

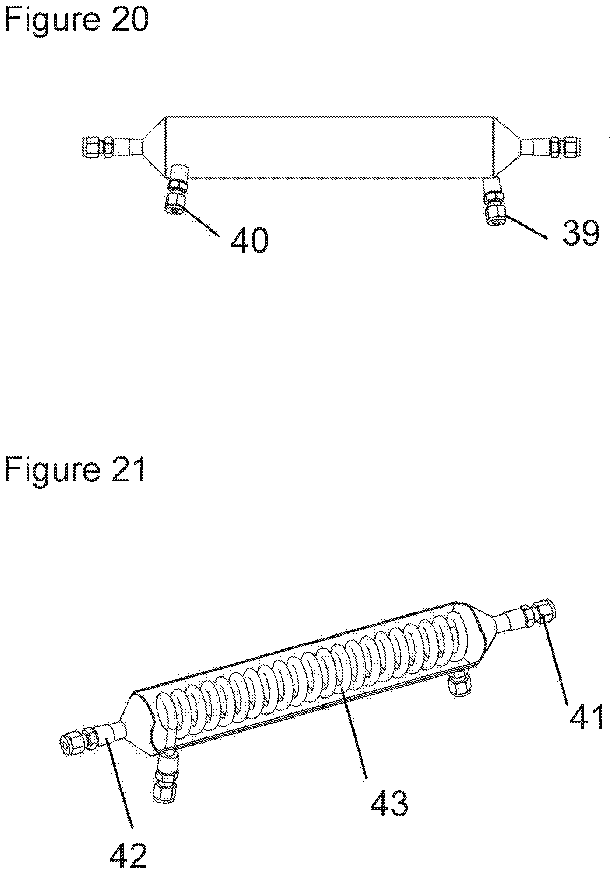

**Figure 20****:** Front view of the heat exchanger of the unmanned aerial vehicle subject to the invention.
**Figure 21****:** Schematic view of the heat exchanger of the unmanned aerial vehicle subject to the invention.

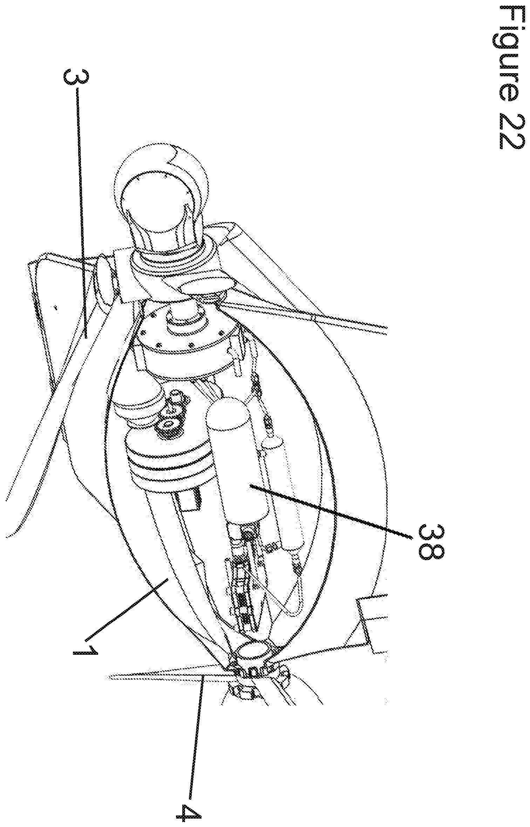

**Figure 22****:** Schematic view of the body on the unmanned aerial vehicle subject to the invention.

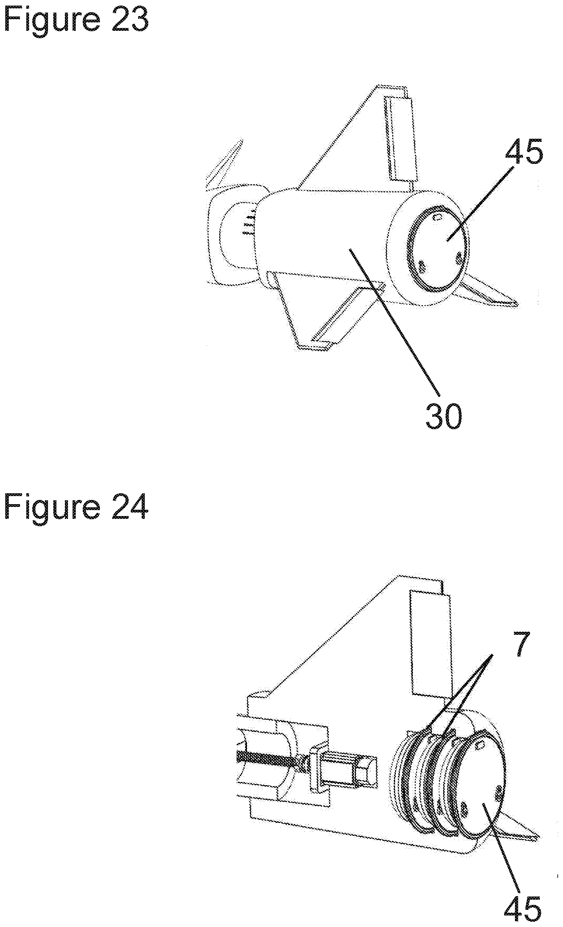

**Figure 23****:** Perspective view of the outer cylinder of the invented unmanned aerial vehicle.
**Figure 24****:** Schematic view of the outer cylinder of the unmanned aerial vehicle subject to the invention.

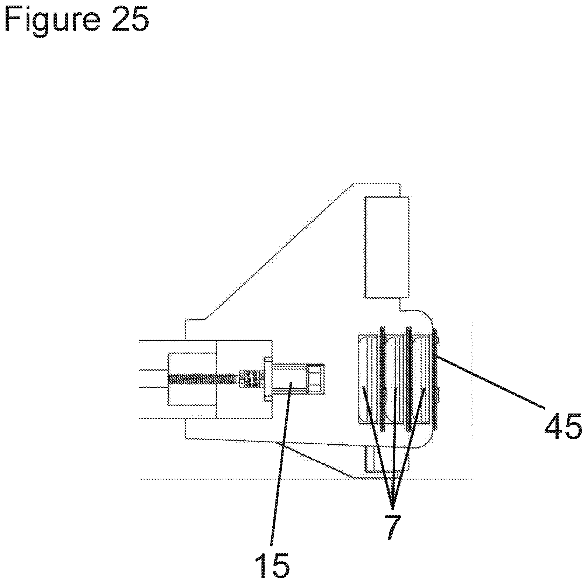

**Figure 25****:** Schematic view of the outer cylinder of the unmanned aerial vehicle subject to the invention, shown from a different angle.

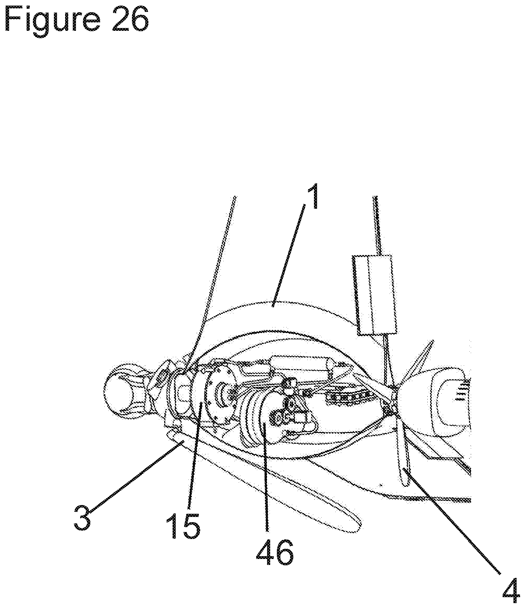

**Figure 26****:** Partial sectional view of the body on the unmanned aerial vehicle subject to the invention from a different angle.

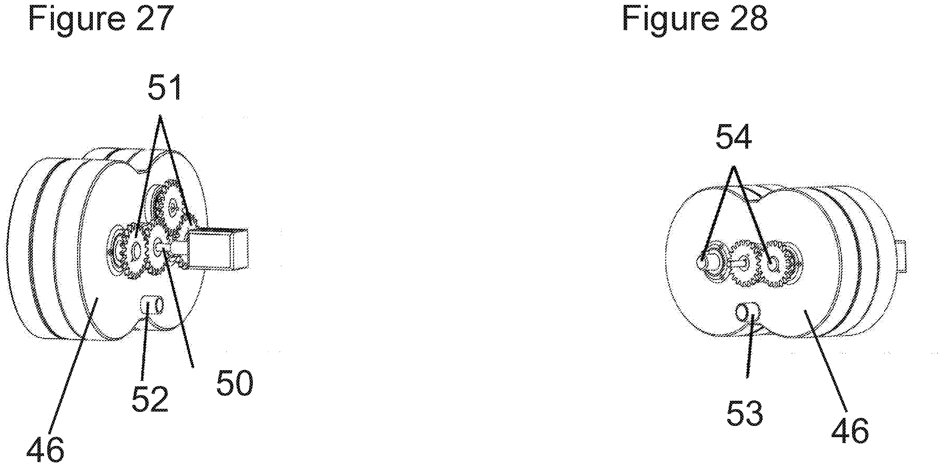

**Figure 27****:** Perspective view of the supercharger of the unmanned aerial vehicle subject to the invention.
**Figure 28****:** Perspective view of the supercharger of the unmanned aerial vehicle subject to the invention from a different angle.

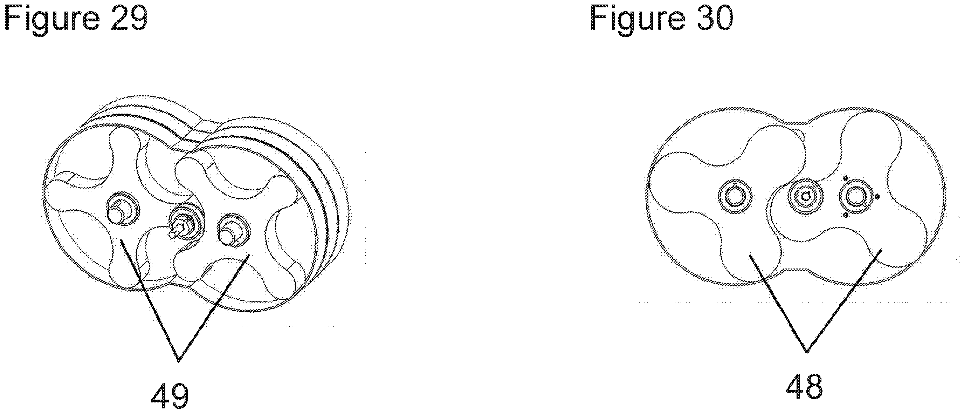

**Figure 29****:** Perspective view of the four-lobe rotary piston of the unmanned aerial vehicle subject to the invention.
**Figure 30****:** Perspective view of the three-lobe rotary piston of the unmanned aerial vehicle subject to the invention.

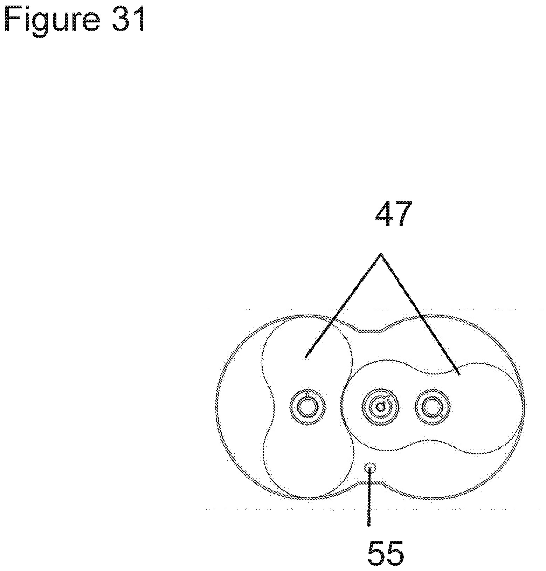

**Figure 31****:** Perspective view of the two-lobe rotary piston of the unmanned aerial vehicle subject to the invention.

The parts on the figures have each been numbered, and these numbers refer to the following items:
1. Body
2. Engine assembly
3. Front propeller
4. Rear propeller
5. Wing
6. Liquid hydrogen tank
7. Balloon
8. Balloon ejection unit
9. Platform
10. Stabilizer
11. Wing body
12. Wing end
13. Microphone
14. Gyroscope unit
15. Internal combustion engine
16. Propeller power transmission shaft
17. Control rack
18. Rack power transmission hub
19. Rack gear train
20. Rotary body bearings
21. Conic cam
22. Conic cam follower
23. Cam follower shaft
24. Cam follower gear
25. Propeller closing gear
26. Rack linear actuator
27. Conic cam linear actuator
28. Slide bearing
29. Internal cylinder
30. External cylinder
31. Engine retainer
32. DC engine
33. Coupler
34. Screw shaft
35. Screw shaft nut
36. Screw shaft nut socket
37. Load balancing mechanism
38. Hydrogen fuel tube
39. Hydrogen inlet valve
40. Hydrogen outlet valve
41. Engine fuel inlet valve
42. Engine fuel outlet valve
43. Helical coiled tube
44. Heat exchanger
45. Balloon cover
46. Supercharger
47. Two-lobe rotary piston
48. Three-lobe rotary piston
49. Four-lobe rotary piston
50. Main driving shaft
51. Transfer gears
52. Air inlet orifice
53. Air outlet orifice
54. Rotary piston drive shaft
55. Air passage clearance

The invention is an unmanned aerial vehicle and it comprises;
- an engine group (2) which is located in the body (1), and provides motion to the front propeller (3) and rear propeller (4),
- a front propeller (3) which is located in front of the body (1) which is connected to the engine group (2),
- a rear propeller (4) which is connected to the engine assembly (2) and is located at the rear of the body (1), which can rotate in the same or opposite direction to the front propeller (3),
- 3 wings (5) which enable vertical take-off and landing of the aerial vehicle, the sharp ends of which are used as landing gear, and which are installed on the body (1) with constant 120 ° spacing,
- a liquid hydrogen tank (6) installed in the center of the rear propeller (4),
- a balloon (7) which is wrapped around the liquid hydrogen tank (6), which is inflated with the hydrogen in the liquid hydrogen tank (6), and enables suspension of the unmanned aerial vehicle in the air,
- a balloon ejection unit (8) which is located at the end portion of the liquid hydrogen tank (6) which releases the balloon (7) during the landing of the unmanned aerial vehicle.

The invention is an unmanned aerial vehicle which comprises a stabilized platform (9) that carries a multispectral camera which is installed in the center of the front propeller (3).

The invention is an unmanned aerial vehicle, which comprises equivalent and symmetrical lateral-vertical stabilizers (10) on the wings (5) which primarily increase the lift and partially the friction by increasing wing (5) hump.

The invention comprises an engine assembly (2), an internal combustion engine (15) and electrical engine in an unmanned aerial vehicle. The fuel supply of the engine assembly (2) is the hydrogen stored in the liquid hydrogen tank (6).

In the unmanned aerial vehicle subject to the invention, the engine assembly (2) comprises a monoblock hybrid engine which runs with both internal combustion and electricity.

The invention is an unmanned aerial vehicle, in one embodiment of which the wing (5) comprises;
- a wing body (11) fixed on the body (1) and placed with 120° spacing,
- a wing end (12) which is mounted on the end of the wing body (10), which is positioned in the same direction as the wing body (11) while the vehicle takes off and gains altitude, expands during gliding and increases the gliding capability of the vehicle by turning 180° in the opposite direction.

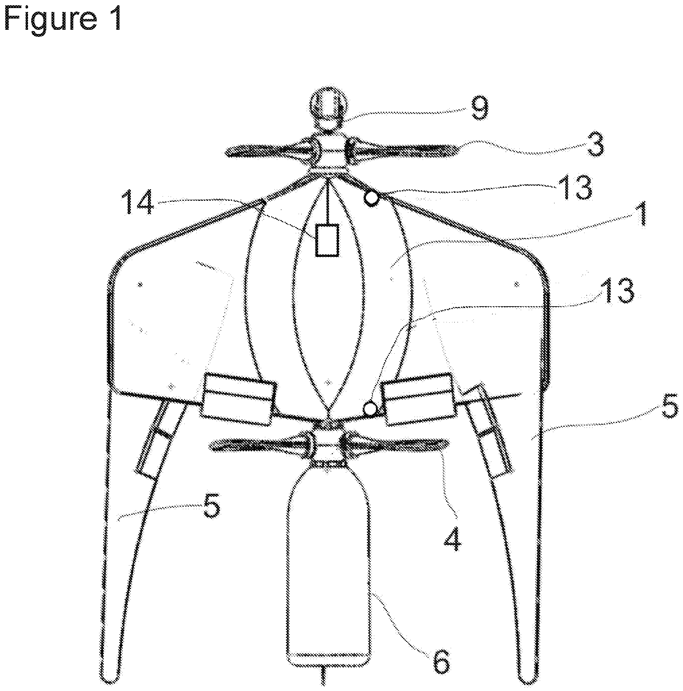

The unmanned aerial vehicle which can vertically take-off and land is positioned in such a manner that its wings (5) will touch the ground during take-off (Figure 1) and the vehicle gains altitude during take-off and when it is in the friendly zone, by means of the internal combustion engine (15) included in the vehicle engine assembly (2). As the vehicle gains altitude, the front propeller (3) and the rear propeller (4) rotate in reverse directions. As a result, by means of the angular moment, the vehicle will not turn around its own axis while take-off. Movement in reverse directions of the front propeller (3) and rear propeller (4) of the engine assembly (2) is ensured with a suitable transmission system located in the body (1).

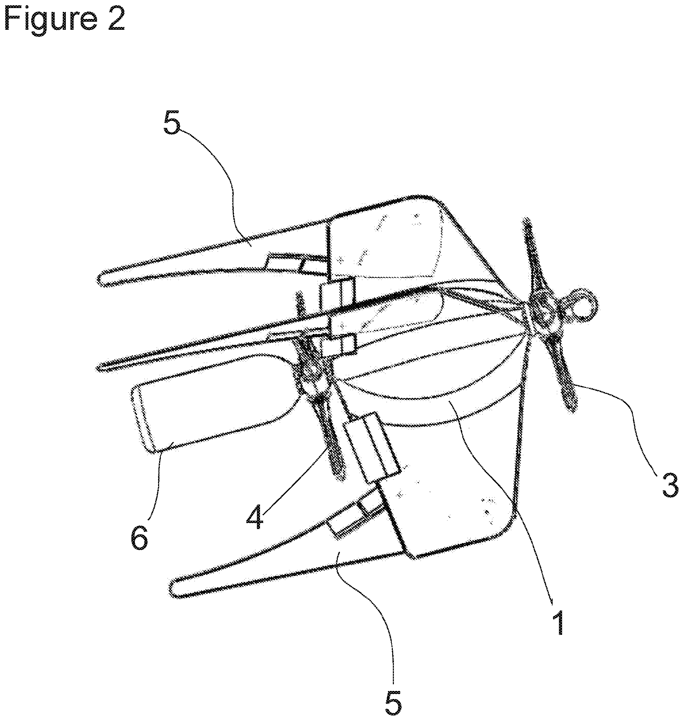

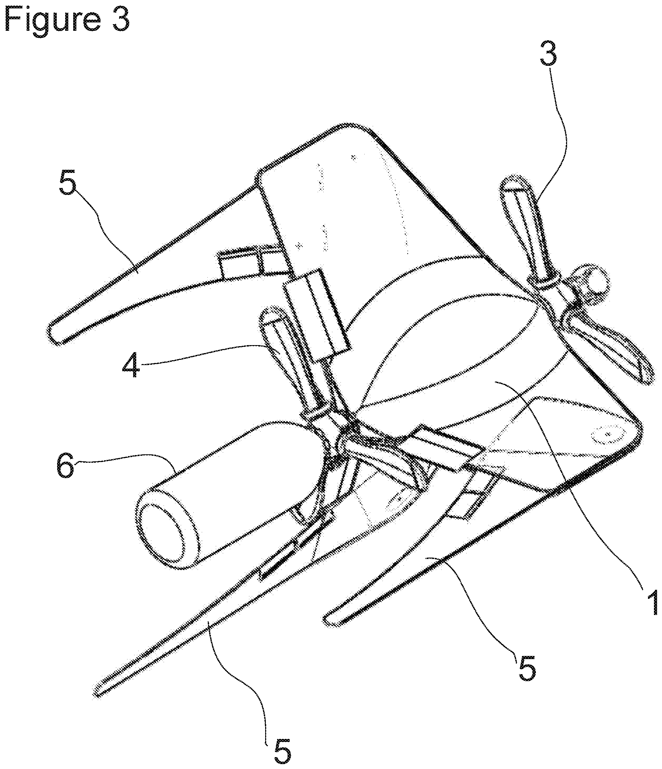

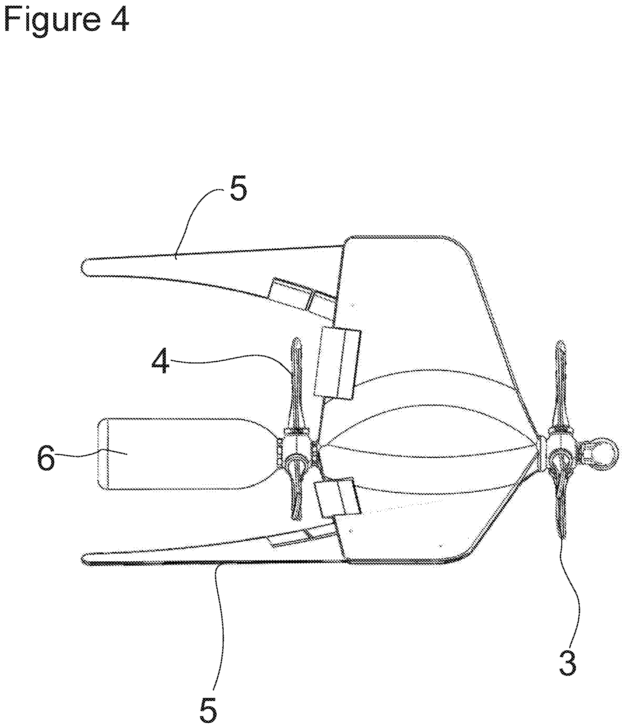

The direction is changed with the remote control for the rising unmanned aerial vehicle to glide in the lateral axis. During this redirection process, the unmanned aerial vehicle reaches a slope position in a manner to create a narrow angle with the lateral axis first, and then it continues flying horizontally. (Figure 2, Figure 3 and Figure 4)

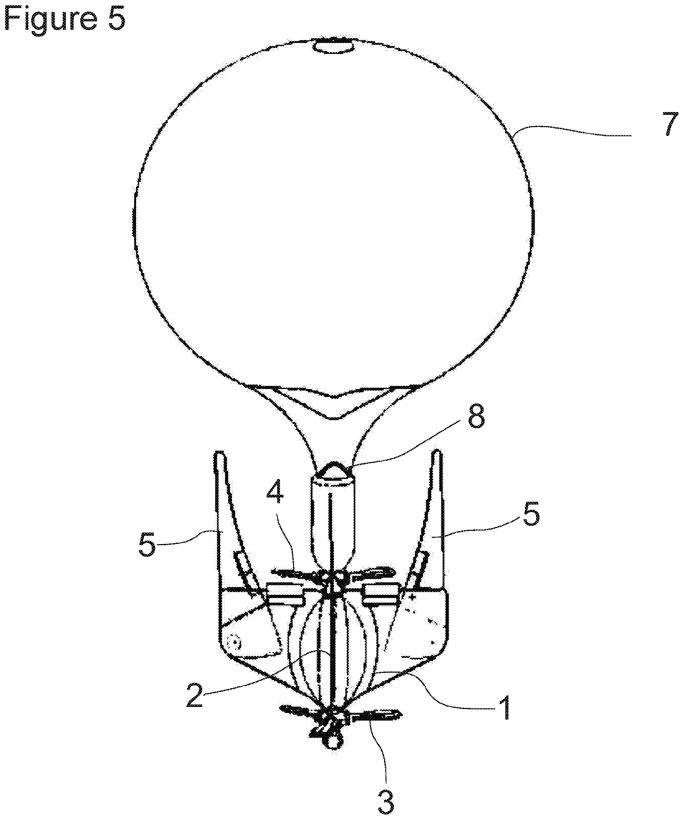

The unmanned aerial vehicle which rises in the vertical axis and reaches the lateral axis, takes a completely reverse position against the take-off position at the target point. At this position, the vehicle runs with an electrical engine in the engine assembly (2) and the balloon is inflated with the hydrogen in the liquid hydrogen tank (6) (Figure 5). As a result, the vehicle maintains its position for a long time and it works by remaining in the air for 24 to 48 hours. The front propeller (3) and the rear propeller (4) of the vehicle suspended in the air operate idle. As a result, the volume of the balloon (7) decreases, it becomes difficult to notice and it remains in the air more stably. The control of with which one of the engines in the engine assembly (2) the front propeller (3) and the rear propeller (4) are to operate is carried out quickly by means of a remote control and/or an inertial navigational system located in the vehicle.

As the unmanned aerial vehicle remains stable in continuously suspended position, it captures very precise images with the multispectral camera located on the stabilized platform (9) that is mounted in the middle section of the front propeller (3). A Gyro unit (14) attached to the front propeller (3) provides reference to the inertial navigational system of the unmanned aerial vehicle, and enables its correct position without support from GPS-like external reference elements.

The rear propeller (4) which runs in the reverse direction to the front propeller (3) rotates in a manner to create 180 degrees phase different sound which has an equal rotation by means of the MEMS microphones (13) located on the unmanned aerial vehicle to eliminate the engine group's (2) noise when desired, thus eliminating and/or reducing the front propeller's (3) noise with acoustic interference. As a result, the invention can move silently even with an internal combustion engine (15).

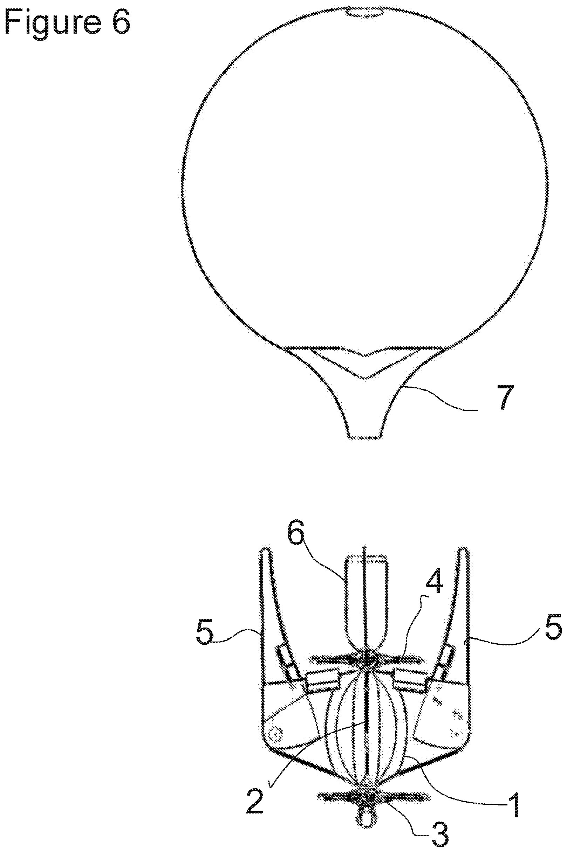

After the duty of the unmanned aerial vehicle is completed, first the balloon (7) is further inflated with the remaining hydrogen and then the autonomous unmanned aerial vehicle takes off silently. At an altitude where the engine assembly's (2) sound cannot be heard, the balloon ejection unit (8) releases the balloon (7) and the vehicle begins descending. (Figure 6)

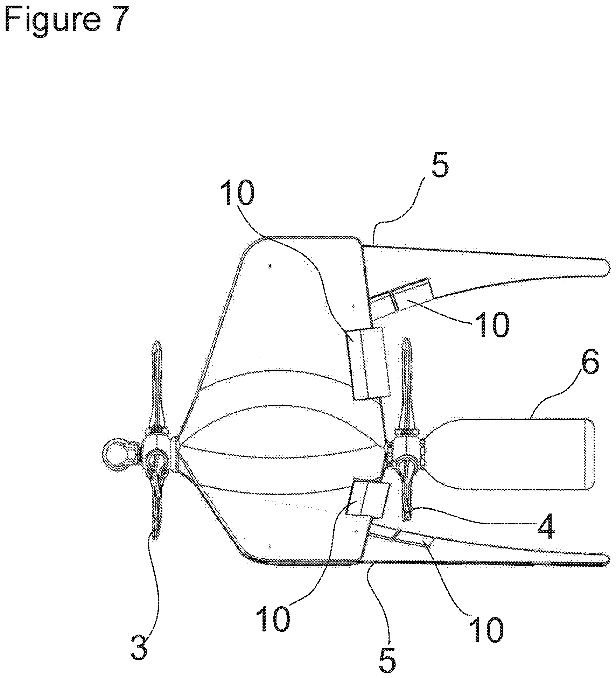

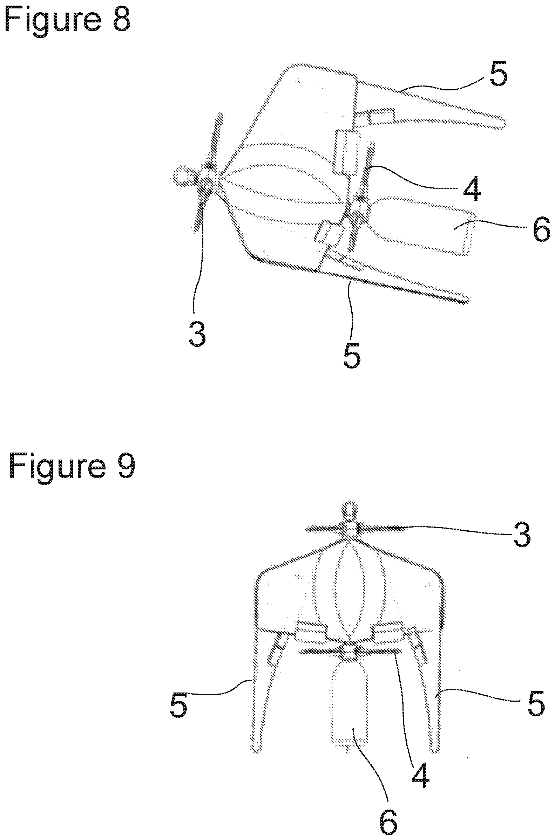

During the landing of the vehicle, similar to the take-off motion, the vehicle is redirected by means of the remote control for gliding in the lateral axis. During this redirection process, the unmanned aerial vehicle reaches a slope position in a manner to create a narrow angle with the lateral axis first, and then it continues flying horizontally (Figure 7). During landing, the wings (5) touch the ground, they reach the initial take-off position and they complete landing (Figure 8 ad Figure 9).

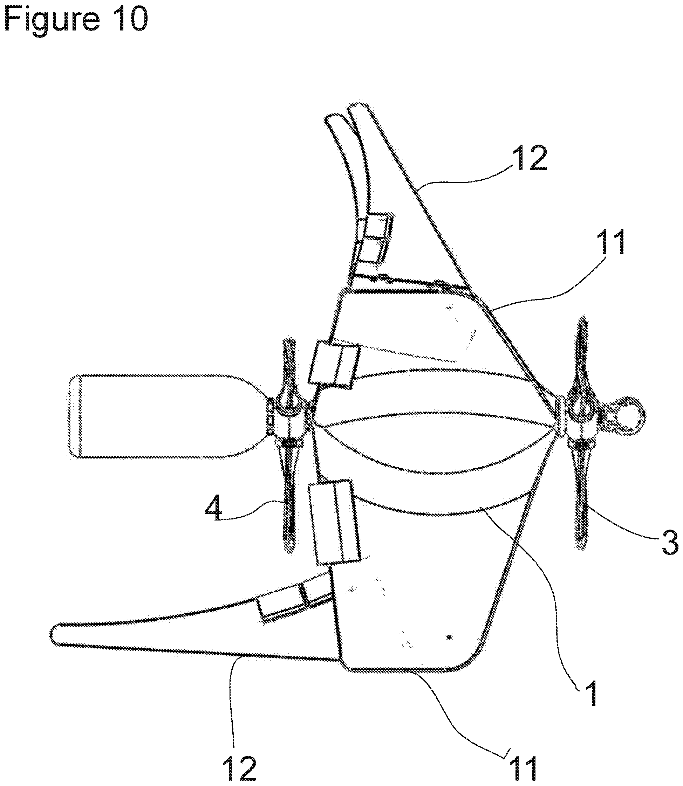

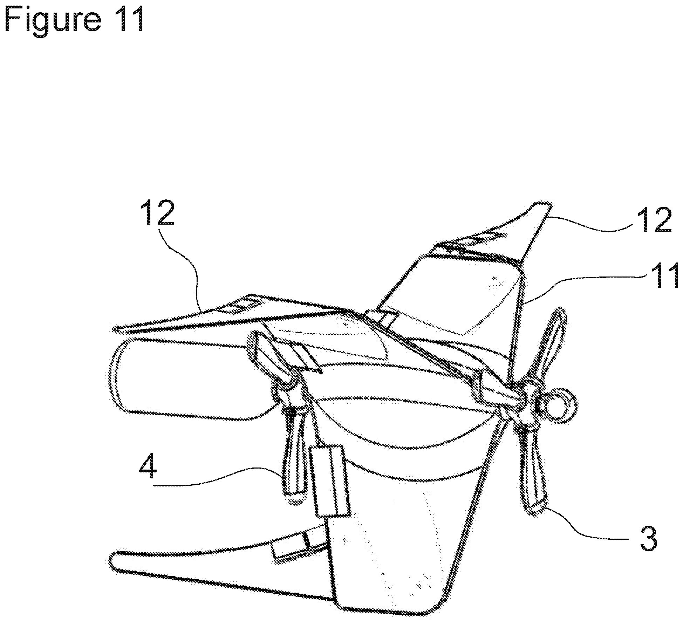

In the event the wings (5) of the unmanned aerial vehicle are wing ends (12) which are installed on the end of the wing body (11) placed with 120° spacing, stably on the body (1) of the vehicle, in other words, if the wings (5) are moveable, the wing ends (12) open while gliding and the gliding capability of the vehicle is increased. (Figure 10 and Figure 11)

In the unmanned aerial vehicle,
o the power of the vehicle reduces when the monoblock hybrid engine of the engine assembly (2) runs with the electric engine only. Therefore, the single electric engine is run for maintaining the position at the point of duty when the balloon (7) is inflated or when it glides downward using the wings of the unmanned aerial vehicle wings (5),
o the liquid hydrogen in the liquid hydrogen tank (6) may be dropped as a bomb or it may be dropped in the event of an emergency,
o during its return, the liquid hydrogen tank (6) is discharged at a minimum level against accidents such as unintended explosion.

Furthermore, the invention is an unmanned aerial vehicle and it operates as follows;
- said autonomous unmanned aerial vehicle can be operated with a remote control or can be operated autonomously,
- the unmanned aerial vehicle takes off by means of the internal combustion engine (15) located in the engine assembly (2),
- while working with an electric engine, the ends of the wings (12) are opened 20-60° and the vehicle takes off,
- the wing ends (12) extend 180° in the lateral axis while the vehicle continues to operate with the electric engine,
- after reaching the target point, the wing ends (12) are retracted and the autonomous aerial vehicle is reversed,
- the balloon (7) is inflated with hydrogen which is stored in the liquid hydrogen tank (6),
- the unmanned aerial vehicle ascends together with the balloon (7) that is inflated with hydrogen,
- the balloon (7) is ejected after the unmanned aerial vehicle rises to an altitude where the sound of the internal combustion engine (15) in the engine assembly (2) cannot be heard,
- the internal combustion engine (15) is operated and the vehicle is returned back to its original location.

Images are captured with the camera located on the platform (9) when the unmanned aerial vehicle reaches the target point.

During the operation of the unmanned aerial vehicle as suspended in the air with the balloon (7), only the rear propeller (4) runs on electricity and by activating the stabilizers (10) it maintains its position with light wind.

The unmanned aerial vehicle can land and take off on any rough surface and on water and can operate in a limited range there when desired in cases of emergency, extreme wind or bad weather conditions and/or where required by the mission.

In cases of attack or danger, the hydrogen in the liquid hydrogen tank (6) can be used as a bomb and it can be exploded.

The invention is an unmanned aerial vehicle which comprises;
- a hollow cylindrical power transmission shaft (16) connected at the hub of the internal combustion engine's (15) shaft and the rotary body bearings (20), and which transfers the torque received from the output shaft of the internal combustion engine (15) to the front propeller (3) and rear propeller (4), and which is located in the engine assembly (2),
- a control rack (17) which consists of three non hollow cylindrical shafts born linearly on the rotary body bearings (20), which transmits the motion received from the rack linear actuator (26) to the rack geartrain (19), and is connected to the rack power transmission hub (18),
- a rack power transmission hub (18) in cylindrical form, which is born in a manner to allow for radial movement in the engine assembly (2) which is in the form of a disk connected with a hollow cylindrical shaft to the rack linear actuator (26) and which can both rotate with the front propeller (3) and rear propeller (14) and can move linearly for pitch control, which provides the movement of the gears that enable pitch control of the front propeller (3) and rear propeller (4) blades by transmitting the linear movement received from the rack linear actuator (26) along the control rack (17),
- a rack geartrain (19) which consists of three rack gears on the shaft connected to the control rack (17), and 3 cogwheels which are connected to the front propeller (3) and positioned to act together with them,
- cylindrically rotating body bearings (20) which are mounted in a manner to allow the radial movement of the engine assembly (2) and which acts rotationally only, transfers the torque received from the rack power transmission hub (18) to the front propeller (3) and rear propellers (4), on which the control rack (17) that advances linearly when the rack power transmission hub (18) acts linearly is supported,
- conic cam (21) in the form of a hollow shaft with a conic cam at its end, which is supported to allow for linear movement according to the engine assembly (2), which moves linearly as a result of the movement received from the conic linear actuator (27), allows for the movement of the conic cam follower (22) in an axis vertical to its axis of movement, and connected to the rotary body bearings (20) so as to turn together with said bearings,
- a conic cam follower (22) which moves on the vertical axis with the linear movement of the conic cam (21) piece, and moves the gear mechanism that enables opening and closing of the front propeller (3) and rear propeller (4) wings, that are in contact with the conic cam (21) and has balls at its end to enable movement,
- a cam follower shaft (23) which is supported to move linearly in the conic cam follower (22), advances upward as the conic cam follower (22) moves towards the greater diameter on the conic cam (21), and acts downward towards the part of the conic cam (21) with smaller diameter, and which is connected to the conic cam follower (22), and which is supported so as to allow for the linear movement to the cogwheel of the rack geartrain (19) connected to the front propeller (3),
- cam follower gear (24) in the form of a cogwheel connected to the cam follower shaft (23) which rotates the propeller closing gear (25) and acts linearly together with the cam follower shaft (23),
- a propeller closing gear (25) which enables turning off the front propeller (3) and rear propeller (4) when they are not in use, and turning them on when they are to be used, which rotates with the upward and downward movement of the cam follower gear (24) on the diameter created by the by the axial offset.
- a rack linear actuator (26) connected to the body, which drives the mechanism that provides the pitch control of the front propeller (3) and the rear propeller (4), transmits linear movement from the inside of the internal combustion engine (15) output shaft to the rack power transmission hub (18), and a hollow cylindrical shaft connected to the body (1) through the hub,
- a conic cam linear actuator (27) connected to the body (1), which drives linearly the conic cam (21) element, and provides this movement with a different shaft passing through the inner side of the hollow internal combustion engine's (15) output shaft.

The front propeller (3) and rear propeller (4) on the body (1) are pitch-controlled. In other words, pitch angles can be changed.

The front propeller (3) operates during vertical take-off and landing of the unmanned aerial vehicle. Furthermore, in the high altitude model, it can also be operated at the higher layers of the atmosphere.

The front propeller (3) is larger than the rear propeller (4) in width (X:1 ratio) and in length (Y:1 ratio). (X and Y are numbers greater than 1)

During lateral constant flight or gliding of the unmanned aerial vehicle, in order to reduce the resistance of air which occurs during the operation of the front propeller (3), the angle of each one of the front propellers (3) is turned in flight direction ideally by 90 degrees but practically at the maximum angle that is allowed by the geometry the front propeller (3) is dependent on and by the pitch control. In other words, the sharp edges of the front propeller (3) look forward as much as possible. This movement is provided with the pitch control mechanism.

On the unmanned aerial vehicle, when the front propeller (3) is not turning, it remains folded downward with gravity as much as the mechanical limits allow for that. However, when the front propeller (3) begins turning, it takes its normal position with centrifugal effect.

The invention is an unmanned aerial vehicle which comprises a load balancing mechanism (37) which includes;
- an inner cylinder (29) which constitutes the inner portion of the mechanism and has linear slide bearings (28) and which is located on the liquid hydrogen tank (6),
- an outer cylinder which acts on the inner cylinder (29) and helps changing the position of the center of gravity, acts on the inner cylinder to shift the center of gravity towards the front side of the vehicle and approaches the body (1) and moves away from it in a completely reverse situation,
- DC engine (32) which is fixed with the engine arrester (31) to the outer cylinder (30) and drives the screw shaft (34) and determines the reciprocal position of the inner cylinder (29) and the outer cylinder (30),
- a coupler (33) which minimizes radial space and transmits torque between the DC engine (32) and the screw shaft (34),
- screw shaft nut (35) which enables translating the movement of the rotationally moving screw shaft (34) to linear movement,
- a screw shaft nut socket (36) which bares the screw shaft nut (35) in the inner cylinder (29).

In the load balancing mechanism (37), DC engine (32) is connected to the screw shaft (34) by means of a coupler (33). A screw shaft nut (35) and a screw shaft nut socket (36) is provided at the end of said screw shaft (34). The DC engine (32) is fixed on the outer cylinder (30). The screw shaft socket (36) is fixed on the inner cylinder (29). The concentric inner cylinder (29) and the outer cylinder (30) are connected to each other with linear slide bearings (28), thus reciprocal rotation of the inner cylinder (29) and the outer cylinder is avoided.

On the load balancing mechanism (37), when the DC engine (32) rotates the screw shaft (34), the rotational movement of the screw shaft nut (35) transforms rotational movement to linear movement; as a result, the inner cylinder (29) and the outer cylinder (30) move on the linear slide bearings (28).

The invention is an unmanned aerial vehicle which comprises;
- a high pressure leak-proof hydrogen input valve (39) fixed to the notch carved at the end of the helical coiled tube (43), which stores hydrogen cryogenically in liquid form at low temperatures and high pressure, provides hydrogen supply as fuel to the internal combustion engine (15), and enables liquid hydrogen feeding from the hydrogen fuel tube (38),
- a high pressure leak-proof hydrogen output valve (40) fixed with a notch opened at the end of the helical coiled tube (43), and through which the hydrogen transforms from liquid to gas form to become a fuel-air mixture,
- high pressure leak-proof oil inlet valve (41) fixed in the internal combustion engine (15) with a screw on the heat exchanger (44), where the oil that reaches high temperature enters,
- a high pressure leak-proof oil output valve (42) that is fixed with a screw onto the heat exchanger (44) where the high temperature lubricant enters through the engine oil input valve (41) and transfers its heat to the liquid hydrogen and which then exits as cooled oil and is then returned to circulation to re-lubricate the internal combustion engine (15),
- a helical coiled tube (43) which enables the exchanging of heat between the hydrogen and the lubricant having a high temperature, where said tube's surface area is high, and which consists of a leak-proof tube welded in a coiled form in the heat exchanger (44),
- heat exchanger (44) in the form of a hollow cylinder that is connected to the body (1) inside the engine assembly.

Hydrogen as the fuel of the internal combustion engine (15) is stored in a hydrogen fuel tube (38) which can cryogenically resist high pressure in liquid form. Heat exchange occurs between the lubricant at high temperatures in liquid form, which assists reducing the friction force during the movement of the radial pistons in the internal combustion engine (15) by means of a heat exchanger (44) before taking the form of an air-fuel mixture, and the hydrogen in liquid form at low temperature. The temperature of the lubricant at high temperature decreases while the hydrogen gasifies with the heat of the lubricant. The heat exchanger (44) used here is in a tube-like form which enables the flow of hydrogen, and has a coil form in which the lubricant travels spirally.

The invention is an unmanned aerial vehicle which comprises balloons (7) compressed and piled successively under the balloon covers (45) to be opened when the balloons (7) are to be activated.

The invented unmanned aerial vehicle comprises
- a supercharger (46) connected to the body (1) on the engine assembly (2) and which enables the internal combustion engine (15) to have sufficient air-fuel mixture while working at high altitude, thus which compresses and accelerates the intake air to mix it in the hydrogen,
- a main drive shaft (50) in cylindrical form having a cogwheel at the ends installed such that it allows radial movement of the supercharger (46) and drives the supercharger transmission gears (51) that move the two-lobe rotary piston (47), three-lobe rotary piston (48) and four-lobe rotary piston (49) located in the supercharger (46),
- air inlet orifice (52) having a notch on the supercharger (46), which allows the air received from the outside to enter the first chamber to be compressed inside the supercharger (46),
- supercharger transfer gears (51) which is formed of a cogwheel coupled to the piston drive shaft (54) and which is placed in a manner to allow different rotational directions but with same rotation speed, which is driven by the main drive shaft (50), and moves the two-lobe rotary piston (47), three-lobe rotary piston (48) and four-lobe rotary piston (49),
- an air discharge orifice (53) which a notch on the supercharger (46), where the air compressed in the last compression chamber of the supercharger (46) is released with the highest compression rate and discharged to be mixed with the hydrogen fuel,
- a piston drive shaft (54) in the form of a cylindrical shaft which is mounted to allow its radial movement into the supercharger (46), and which rotates the elements that conduct the compression function together with itself, and to which torque is transmitted from the main drive shaft (50) via the transmission gears (51),
- a four-lobe rotary piston (49) connected to the piston drive shaft (54) which consists of four lobes in the chamber at the highest layer, which has the highest air pressure in the supercharger (46),
- a three-lobe rotary piston (48) connected to the piston drive shaft (54) which consists of three lobes in the chamber at the second layer in the supercharger (46),
- a two-lobe rotary piston (47) connected to the piston drive shaft (54) which comprises two lobes at the inlet layer of the supercharger (46), an air passage opening (55) with a certain diameter on the chambers along the same axis in the supercharger (46), through which the air passes in the direction at which the compression rate increases among the chambers where the air is compressed; the air compressed in the first chamber is urged to go to the second chamber by means of the two-lobe rotary pistons (47), and similarly, the air passes to the third chamber with four-lobe rotary pistons (49).

## Claims

1. An unmanned aerial vehicle comprising:
- **an engine group (2)** which is located in the body (1), and provides motion to the front propeller (3) and rear propeller (4),
- **a front propeller (3)** which is located in front of the body (1) which is connected to the engine group (2),
- **a rear propeller (4)** which is connected to the engine assembly (2) and is located at the rear of the body (1), which can rotate in the same or opposite direction to the front propeller (3),
- **3 wings (5)** which enable vertical take-off and landing of the aerial vehicle, the sharp ends of which are used as landing gear, and which are installed on the body (1) with constant 120 ° spacing,
**characterized in that** it comprises:
- **a liquid hydrogen tank (6)** installed in the center of the rear propeller (4),
- **a balloon (7)** which is wrapped around the liquid hydrogen tank (6), which is inflated with the hydrogen in the liquid hydrogen tank (6) and enables suspension of the unmanned aerial vehicle in the air.

2. An unmanned aerial vehicle according to Claim 1; **characterized in that** it comprises a **balloon ejection unit(8)** which is located at the end portion of the liquid hydrogen tank (6) which releases the balloon (7) during the landing of the unmanned aerial vehicle.

3. An unmanned aerial vehicle according to any of the preceding claims; **characterized in that** it comprises a mono block hybrid engine which operates the engine group (2) with an internal combustion engine (15) during the lift off and when the vehicle is operated in the friendly zone, and which operates with electricity without noise in the mission area.

4. An unmanned aerial vehicle according to any of the preceding claims, **characterized in that** it comprises a **wing body (11)** that is mounted on the body (1) with 120° spacing.

5. An unmanned aerial vehicle according to any of the preceding claims, **characterized in that** it comprises a **wing end (12)** that is mounted on the end portion of the wing body (11), and that is positioned in the same direction as the wing body (11) when the vehicle is taking off and when it is gaining altitude, and which expands when the vehicle is gliding which turns 180° in the opposite direction to increase the gliding capacity of the vehicle.

6. An unmanned aerial vehicle according to any of the preceding claims, **characterized in that** it comprises a **Gyro unit (14)** attached to the front propeller (3), which provides reference to the inertial navigational system of the unmanned aerial vehicle, and enables its correct positioning and autonomous flight without support from GPS-like external reference elements.

7. An unmanned aerial vehicle according to any of the preceding claims, **characterized in that** it comprises MEMPS **microphones (13)** located on the unmanned aerial vehicle to eliminate and/or reduce the engine group's (2) noise by means of an acoustic interference method as the rear propeller (4) rotates with the same rotations speed as the front propeller (3) but with 180 degrees phase so as to create a different noise.

8. An unmanned aerial vehicle according to any of the preceding claims, **characterized in that** it is configured to operate as follows,
- the autonomous unmanned aerial vehicle is operated with a remote control or operated autonomously,
- the autonomous unmanned aerial vehicle takes off by the internal combustion engine (15) wherein the internal combustion engine (15) is located in the engine assembly (2),
- the ends of the wings (12) are opened 20-60° and the vehicle takes off while working with an electric engine,
- the wing ends (12) extend 180° in the lateral axis while the vehicle continues to operate with the electric engine,
- the wing ends (12) are retracted and the autonomous aerial vehicle is reversed after reaching the target point,
- the balloon (7) is inflated with hydrogen which is stored in the liquid hydrogen tank (6),
- the unmanned aerial vehicle ascends together with the balloon (7) that is inflated with hydrogen,
- the balloon (7) is ejected after the unmanned aerial vehicle rises to an altitude where the sound of the internal combustion engine (15) in the engine assembly (2) cannot be heard,
- the internal combustion engine (15) is operated and the vehicle is returned back to its original location.

9. An unmanned aerial vehicle according to any of the preceding claims, **characterized in that** it comprises a liquid hydrogen tank (6), the hydrogen in which can be exploded as a bomb in the event of an attack or danger.

10. An unmanned aerial vehicle according to any of the preceding claims, **characterized in that** it operates by means of,
- a hollow cylindrical power transmission shaft (16) connected at the hub of the internal combustion engine (15) output shaft and the rotary body bearings (20) in the engine assembly (2) of the body (1),
- a control rack (17) which comprises three non-hollow cylindrical shafts born linearly on the rotary body bearings (20) that is connected to the rack power transmission hub (18),
- a rack power transmission hub (18) in cylindrical form, which is born in a manner to allow the radial movement in the engine assembly (2) which is in the form of a disk connected with a hollow cylindrical shaft to the rack linear actuator (26),
- a rack geartrain (19) which comprises 3 rack gears on the shaft connected to 3 control racks (17), and 3 cogwheels which are connected to the front propeller (3) and positioned to act together with said cogwheels,
- cylindrical rotary body bearings (20) that are mounted to the engine assembly (2) to allow their radial movement,
- conic cam (21) in the form of a hollow shaft having the conic cam at its end portion, which is mounted to allow for linear movement relative to the engine assembly (2), and that are connected to the rotary body bearings (20) so as to rotate together with said bearings,
- a conic cam follower (22) which contacts the conic cam (21) and has a moveable ball at its end to enable movement,
- a cam follower shaft (23) as a cylindrical shaft mounted linearly moveable to the cogwheel of the rack geartrain (19), that is connected to the front propeller (3) which in turn is connected to the conic cam follower (22),
- cam follower gear (24) in the form of a cogwheel connected to the cam follower shaft (23),
- a propeller closing gear (25) which is placed as axially offset compared to the rack follower gear (24) which is connected to the front propeller (3),
- a rack linear actuator (26) connected to the body (1), which has a hollow cylindrical output shaft connected through the hub of the rack power transmission hub (18),
- conic cam linear actuator (27) connected to the body (1), which has a cylindrical output shaft connected through the hub to the conic cam (21).

11. An unmanned aerial vehicle according to any of the preceding claims, which comprises
- an inner cylinder (29) which constitutes the inner portion of the mechanism and has linear slide bearings (28) and which is located on the liquid hydrogen tank (6),
- an outer cylinder (30) which acts on the inner cylinder (29) and enables to change the position of the center of gravity, and moves towards the body (1) by moving on the inner cylinder (29) in order to shift the center of gravity towards the front section of the vehicle and moves away from the body in order to shift the center of gravity back.
- DC engine (32) which is fixed with the engine arrester (31) to the outer cylinder and drives the screw shaft (34) and determines the position of the inner cylinder (29) and the outer cylinder (30) relative to each other,
- A coupler (33) which minimizes the radial space and transmits torque between the DC engine (32) and the screw shaft (34)
- a screw shaft nut (35) which enables translating the movement of the rotationally moving screw shaft (34) into linear movement,
- a screw shaft nut socket (36) having a screw shaft nut (35) mounted into the inner cylinder (29),
**characterized in that** it comprises a load balancing mechanism (37).

12. An unmanned aerial vehicle according to any of the preceding claims, **characterized in that** it comprises
- a heat exchanger (44) in the form of a hollow cylinder connected to the body (1) in the engine assembly (2),
- a helical coiled tube (43) which comprises a welded leak-proof tube in helical form inside the heat exchanger (44),
- a high pressure leak-proof hydrogen input valve (39) fixed to the notch opened at the end of the helical coiled tube (43),
- a high pressure leak-proof hydrogen output valve (40) fixed to the notch opened at the end of the helical coiled tube (43),
- an oil input valve (41) which is leak-proof at high pressures and which is fixed with the screw onto the heat exchanger (44),
- an oil output valve (42) which is leak-proof at high pressures and is fixed with the screw onto the heat exchanger (44).

13. An unmanned aerial vehicle according to any of the preceding claims, **characterized in that** it comprises balloon covers (45) which will be opened when the balloons (7) are to be activated, where said covers are located between the balloons (7) that have been compressed and folded and successively stacked.

14. An unmanned aerial vehicle according to any of the preceding claims, **characterized in that** it comprises
- a supercharger (46) connected to the body (1) in the engine assembly (2),
- a cylindrical main drive shaft (50) with a cogwheel at the ends thereof which is mounted to the supercharger (46), to allow radial movement of said shaft,
- air inlet orifice (52) with an opened notch located on the supercharger (46),
- supercharger transmission gears (51) which are formed of a cogwheel coupled to the piston drive shaft (54),
- air outlet orifice (53) with an opened notch located on the supercharger (46),
- a piston drive shaft (54) in the form of a cylindrical shaft attached to the supercharger (46), such that it can move in a radial motion,
- a four-lobe rotary piston (49) connected to the piston drive shaft (54) which consists of four lobes in the chamber at the highest layer, which has the highest air pressure in the supercharger (46),
- a three-lobe rotary piston (48) connected to the piston drive shaft (54) which consists of three lobes in the chamber at the second layer in the supercharger (46),
- a two-lobe rotary piston (47) connected to the piston drive shaft (54) which consists of two lobes in the chamber at the entrance layer in the supercharger (46),
- an air passage opening (55) having a certain diameter located on the chambers along the same axis in the supercharger (46).

15. An unmanned aerial vehicle according to any of the foregoing claims, **characterized in that** it can maintain its position under light wind conditions during its operation when it is suspended in the air by means of the balloon (7), by running the rear propellers (4) with electricity and by activating the stabilizers (10).

## Patentansprüche

1. Unbemanntes Luftfahrzeug, umfassend:
- **eine Motorgruppe (2),** die sich in dem Körper (1) befindet und den vorderen Propeller (3) und den hinteren Propeller (4) antreibt,
- **einen vorderen Propeller (3),** der sich an der Vorderseite des Körpers (1) befindet, der mit der Motorgruppe (2) verbunden ist,
- **einen hinteren Propeller (4),** der mit der Motoranordnung (2) verbunden ist und sich an der Rückseite des Körpers (1) befindet, und der sich in die gleiche Richtung oder in die entgegengesetzte Richtung wie der vordere Propeller (3) drehen kann"
- **3 Flügel (5),** die das vertikale Starten und Landen des Luftfahrzeugs ermöglichen, deren spitze Enden als Fahrwerk dienen und die mit einem konstanten Abstand von 120° am Körper (1) eingebaut sind,
**dadurch gekennzeichnet, dass** es Folgendes umfasst:
- **einen Flüssigwasserstofftank (6),** der in der Mitte des hinteren Propellers (4) eingebaut ist,
- **einen Ballon (7),** der um den Flüssigwasserstofftank (6) gewickelt ist, der mit dem Wasserstoff im Flüssigwasserstofftank (6) aufgeblasen wird und der das unbemannte Luftfahrzeug in der Luft schweben lässt.

2. Unbemanntes Luftfahrzeug nach Anspruch 1, **dadurch gekennzeichnet, dass** es eine **Ballonausstoßeinheit (8)** umfasst, die sich am Endabschnitt des Flüssigwasserstofftanks (6) befindet, der den Ballon (7) während der Landung des unbemannten Luftfahrzeugs freigibt.

3. Unbemanntes Luftfahrzeug nach einem der vorhergehenden Ansprüche, **dadurch gekennzeichnet, dass** es einen Monoblock-Hybridmotor umfasst, der die Motorgruppe (2) mit einem Verbrennungsmotor (15) während des Starts und beim Betrieb des Fahrzeugs in der Friendly Zone antreibt und der in der Mission Zone elektrisch und geräuschlos betrieben wird.

4. Unbemanntes Luftfahrzeug nach einem der vorhergehenden Ansprüche, **dadurch gekennzeichnet, dass** es einen **Flügelkörper (11)** umfasst, der mit einem Abstand von 120° an dem Körper (1) montiert ist.

5. Unbemanntes Luftfahrzeug nach einem der vorhergehenden Ansprüche, **dadurch gekennzeichnet, dass** es eine **Flügelspitze (12)** umfasst, die an dem Endabschnitt des Flügelkörpers (11) angebracht ist und die in der gleichen Richtung wie der Flügelkörper (11) positioniert ist, wenn das Fahrzeug startet und an Höhe gewinnt, und die sich ausdehnt, wenn das Fahrzeug im Segelflug ist, der sich um 180° in die entgegengesetzte Richtung dreht, um die Segelflugfähigkeit des Fahrzeugs zu erhöhen.

6. Unbemanntes Luftfahrzeug nach einem der vorhergehenden Ansprüche, **dadurch gekennzeichnet, dass** es eine am vorderen Propeller (3) angebrachte **Gyroskopeinheit (14)** umfasst, die dem Trägheitsnavigationssystem des unbemannten Luftfahrzeugs eine Referenz liefert und seine korrekte Positionierung und seinen autonomen Flug ohne Unterstützung durch externe GPS-ähnliche Referenzelemente ermöglicht.

7. Unbemanntes Luftfahrzeug nach einem der vorhergehenden Ansprüche, **dadurch gekennzeichnet, dass** es **MEMPS-Mikrofone (13)** umfasst, die sich an dem unbemannten Luftfahrzeug befinden, um das Geräusch der Motorgruppe (2) mittels eines akustischen Interferenzverfahrens zu eliminieren und/oder zu reduzieren, während sich der hintere Propeller (4) mit der gleichen Drehgeschwindigkeit wie der vordere Propeller (3), aber mit einer Phase von 180 Grad dreht, um ein anderes Geräusch zu erzeugen.

8. Unbemanntes Luftfahrzeug nach einem der vorhergehenden Ansprüche, **dadurch gekennzeichnet, dass** es konfiguriert ist, wie folgt zu betrieben,
- das autonome unbemannte Luftfahrzeug wird mit einer Fernbedienung bedient oder selbstständig betrieben,
- das autonome unbemannte Luftfahrzeug durch den Verbrennungsmotor (15) startet, wobei sich der Verbrennungsmotor (15) in der Motoranordnung (2) befindet,
- die Flügelspitze (12) um 20-60° geöffnet sind und das Fahrzeug mit einem Elektromotor fahrend abhebt,
- die Flügelspitze (12) sich um 180° in der Seitenachse erstrecken, während das Fahrzeug weiterhin mit dem Elektromotor operiert,
- die Flügelspitze (12) eingezogen werden und das autonome Luftfahrzeug nach Erreichen des Zielpunktes umgekehrt wird,
- der Ballon (7) mit Wasserstoff aufgeblasen wird, der in dem Flüssigwasserstofftank (6) gespeichert ist,
- das unbemannte Luftfahrzeug steigt zusammen mit dem Ballon (7) auf, der mit Wasserstoff gefüllt ist,
- der Ballon (7) ausgestoßen wird, nachdem das unbemannte Luftfahrzeug bis zu einer Höhe aufsteigt, in der das Geräusch des Verbrennungsmotors (15) in der Motoranordnung (2) nicht gehört werden kann,
- der Verbrennungsmotor (15) in Betrieb genommen und das Fahrzeug wieder an seinen ursprünglichen Standort zurückgebracht wird.

9. Unbemanntes Luftfahrzeug nach einem der vorhergehenden Ansprüche, **dadurch gekennzeichnet, dass** es einen Flüssigwasserstofftank (6) umfasst, in dem der Wasserstoff im Falle eines Angriffs oder einer Gefahr wie eine Bombe explodieren kann.

10. Unbemanntes Luftfahrzeug nach einem der vorhergehenden Ansprüche, **dadurch gekennzeichnet, dass** es operiert mit Hilfe von,
- eine hohlzylindrische Kraftübertragungswelle (16), die mit der Nabe der Abtriebswelle des Verbrennungsmotors (15) verbunden ist, und drehbare Körperlager (20) in der Motoranordnung (2) des Körpers (1),
- eine Steuerzahnstange (17), die drei nicht hohlen zylindrischen Wellen umfasst, die linear auf den drehbaren Körperlagern (20) gelagert sind, der mit der Zahnstangenkraftübertragungsnabe (18) verbunden ist,
- eine zylinderförmige Zahnstangenkraftübertragungsnabe (18), die derart gelagert ist, dass sie eine radiale Bewegung in der Motoranordnung (2) ermöglicht, die die Form einer Scheibe hat, die mit einer zylindrischen Hohlwelle mit dem linearen Zahnstangenantrieb (26) verbunden ist,
- ein Zahnstangengetriebe (19), das 3 Zahnstangenräder auf der Welle umfasst, die mit 3 Steuerzahnstangen (17) verbunden sind, und 3 Zahnräder, die mit dem vorderen Propeller (3) verbunden sind und positioniert sind, um gemeinsam mit den genannten Zahnrädern zu wirken,
- zylindrische drehbaren Körperlager (20), die an der Motoranordnung (2) montiert sind, um deren radiale Bewegung zu ermöglichen,
- eine konische Nocke (21) in Form einer Hohlwelle mit der konischen Nocke an ihrem Endabschnitt, die montiert ist, um eine lineare Bewegung relativ zur Motoranordnung (2) zu ermöglichen, und die mit den drehbaren Körperlagern (20) verbunden ist, um sich mit den genannten Lagern zu drehen,
- einen konischen Nockenstößel (22), der mit dem konischen Nocken (21) in Kontakt steht und an seinem Ende eine abnehmbare Kugel hat, um eine Bewegung zu ermöglichen,
- eine Nockenstößelwelle (23) als eine zylindrische Welle, die linear abnehmbar an dem Zahnrad des Zahnstangengetriebes (19) angebracht ist, das mit dem vorderen Propeller (3) verbunden ist, der wiederum mit der kegelförmigen Nockenstößel (22) verbunden ist,
- ein Nockenstößelzahnrad (24) in Form eines Zahnrads, das mit der Nockenstößelwelle (23) verbunden ist,
- ein Propellerschließzahnrad (25), das axial versetzt zu dem Zahnstangenstößelrad (24) angeordnet ist, das mit dem vorderen Propeller (3) verbunden ist,
- einen mit dem Körper (1) verbundenen linearen Zahnstangenantrieb (26), der eine hohlzylindrische Ausgangswelle aufweist, die durch die Nabe der Zahnstangenkraftübertragungsnabe (18) hindurchgeführt ist,
- einen mit dem Körper (1) verbundenen Linearantrieb mit konischem Nocken (27), der eine zylindrische Abtriebswelle hat, die durch die Nabe mit dem konischen Nocken (21) verbunden ist.

11. Unbemanntes Luftfahrzeug nach einem der vorhergehenden Ansprüche, das Folgendes umfasst
- einen inneren Zylinder (29), der den inneren Teil des Mechanismus bildet und lineare Gleitlager (28) hat und sich auf dem Flüssigwasserstofftank (6) befindet,
- einen äußeren Zylinder (30), der auf den inneren Zylinder (29) einwirkt und es ermöglicht, die Position des Schwerpunkts zu ändern, und sich auf den Körper (1) zu bewegt, indem er sich auf dem inneren Zylinder (29) bewegt, um den Schwerpunkt zum vorderen Abschnitt des Fahrzeugs hinzuverschieben, und sich vom Körper wegbewegt, um den Schwerpunkt nach hinten zu verlagern.
- einen Gleichstrommotor (32), der mit dem Motorstopp (31) am äußeren Zylinder befestigt ist und der die Schraubenwelle (34) antreibt und die Position des inneren Zylinders (29) und des äußeren Zylinders (30) relativ zueinander bestimmt,
- Eine Kupplung (33), die den Radialspalt minimiert und das Drehmoment zwischen dem Gleichstrommotor (32) und der Schraubenwelle (34) überträgt.
- eine Schraubenwellenmutter (35), mit der die Bewegung der drehbaren Schraubenwelle (34) in eine lineare Bewegung übersetzt werden kann,
- eine Schraubenwellenmutterhülse (36) mit einer Schraubenwellenmutter (35), die in dem inneren Zylinder (29) montiert ist,
**dadurch gekennzeichnet, dass** es einen Lastausgleichsmechanismus (37) umfasst.

12. Unbemanntes Luftfahrzeug nach einem der vorhergehenden Ansprüche, **dadurch gekennzeichnet, dass** es Folgendes umfasst
- einen Wärmetauscher (44) in Form eines Hohlzylinders, der mit dem Körper (1) in der Motoranordnung (2) verbunden ist,
- ein schraubenförmig gewickeltes Rohr (43), das ein dichtes Rohr umfasst, das schraubenförmig in das Innere des Wärmetauschers (44) eingeschweißt ist,
- ein dichtes Hochdruck-Wasserstoffeinlassventil (39), das an der offenen Kerbe am Ende des spiralförmig gewickelten Rohrs (43) befestigt ist,
- ein dichtes Hochdruck-Wasserstoffauslassventil (40), das an der offenen Kerbe am Ende des spiralförmig gewickelten Rohrs (43) befestigt ist,
- ein Öleinlassventil (41), das gegen hohe Drücke abgedichtet ist und mit der Schraube am Wärmetauscher (44) befestigt ist,
- ein Ölauslassventil (42), das gegen hohe Drücke abgedichtet ist und mit der Schraube am Wärmetauscher (44) befestigt ist.

13. Unbemanntes Luftfahrzeug nach einem der vorhergehenden Ansprüche, **dadurch gekennzeichnet, dass** es Ballonabdeckungen (45) umfasst, die geöffnet werden, wenn die Ballons (7) aktiviert werden sollen, wobei sich die genannten Abdeckungen zwischen den Ballons (7) befinden, die nacheinander zusammengepresst und gefaltet und gestapelt wurden.

14. Unbemanntes Luftfahrzeug nach einem der vorhergehenden Ansprüche, **dadurch gekennzeichnet, dass** es Folgendes umfasst
- einen Supercharger (46), der mit dem Körper (1) in der Motoranordnung (2) verbunden ist,
- eine zylindrische Hauptantriebswelle (50) mit einem Zahnrad an ihren Enden, die an dem Supercharger (46) angebracht ist, um eine radiale Bewegung der genannten Welle zuzulassen,
- eine Lufteinlassöffnung (52) mit einer offenen Kerbe, die sich auf dem Supercharger (46) befindet,
- die Getriebezahnräder des Superchargers (51), die aus einem Zahnrad bestehen, das mit der Kolbenantriebswelle (54) gekoppelt ist,
- eine Luftauslassöffnung (53) mit einer offenen Kerbe, die sich auf dem Supercharger (46) befindet,
- eine Kolbenantriebswelle (54) in Form einer zylindrischen Welle, die an dem Supercharger (46) befestigt ist, so dass sie sich in einer radialen Bewegung bewegen kann,
- einen vierlappigen Drehkolben (49), der mit der Kolbenantriebswelle (54) verbunden ist und aus vier Lappen in der Kammer mit der höchsten Schicht besteht, die den höchsten Luftdruck im Supercharger (46) hat,
- einen dreilappigen Drehkolben (48), der mit der Kolbenantriebswelle (54) verbunden ist, die in der Kammer bei der zweiten Schicht im Supercharger (46) aus drei Lappen besteht,
- einen zweilappigen Drehkolben (47), der mit der Kolbenantriebswelle (54) verbunden ist, die aus zwei Lappen in der Kammer an der Eingangsschicht in den Supercharger (46) besteht,
- eine Luftdurchgangsöffnung (55) mit einem bestimmten Durchmesser, die sich an den Kammern entlang der gleichen Achse im Supercharger (46) befindet.

15. Unbemanntes Luftfahrzeug nach einem der vorhergehenden Ansprüche, **dadurch gekennzeichnet, dass** es seine Position bei leichten Windbedingungen während seines Betriebs beibehalten kann, wenn es mittels des Ballons (7) in der Luft hängt, indem die hinteren Propeller (4) mit Elektrizität betrieben werden und die Stabilisatoren (10) aktiviert werden.

## Revendications

1. Véhicule aérien sans pilote comprenant :
- **un groupe moteur (2)** qui est situé dans le corps (1), et fournit une motion à l'hélice avant (3) et à l'hélice arrière (4),
- **une hélice avant (3)** qui est située à l'avant du corps (1) qui est connecté au groupe moteur (2),
- **une hélice arrière (4)** qui est connectée à l'ensemble moteur (2) et est située à l'arrière du corps (1), qui peut tourner dans le même sens ou dans le sens opposé à l'hélice avant (3),
- **3 ailes (5)** qui permettent le décollage et l'atterrissage vertical du véhicule aérien, dont les extrémités pointues sont utilisées comme train d'atterrissage, et qui sont installées sur le corps (1) avec un espacement constant de 120 °,
**caractérisé en ce qu'**il comprend :
- **un réservoir d'hydrogène liquide (6)** installé au centre de l'hélice arrière (4),
- **un ballon (7)** qui est enroulé autour du réservoir d'hydrogène liquide (6), qui est gonflé avec l'hydrogène dans le réservoir d'hydrogène liquide (6) et qui permet la suspension du véhicule aérien sans pilote dans l'air.

2. Véhicule aérien sans pilote selon la revendication 1, **caractérisé en ce qu'il** comprend **une unité d'éjection de ballon (8)** qui est située à la portion d'extrémité du réservoir d'hydrogène liquide (6) qui libère le ballon (7) pendant l'atterrissage du véhicule aérien sans pilote.

3. Véhicule aérien sans pilote selon l'une quelconque des revendications précédentes, **caractérisé en ce qu'il** comprend un moteur hybride monobloc qui fait opérer le groupe moteur (2) avec un moteur à combustion interne (15) pendant le soulèvement et lorsque le véhicule est opéré dans la zone amicale, et qui est opéré à l'électricité sans bruit dans la zone de mission.

4. Véhicule aérien sans pilote selon l'une quelconque des revendications précédentes, **caractérisé en ce qu'il** comprend **un corps d'aile (11)** qui est monté sur le corps (1) avec un espacement de 120°.

5. Véhicule aérien sans pilote selon l'une quelconque des revendications précédentes, **caractérisé en ce qu'il** comprend **une extrémité d'aile (12)** qui est montée sur la portion d'extrémité du corps d'aile (11), et qui est positionnée dans la même direction que le corps d'aile (11) lorsque le véhicule décolle et lorsqu'il prend de l'altitude, et qui se dilate lorsque le véhicule est en vol à voile qui tourne de 180° dans la direction opposée pour augmenter la capacité de vol à voile du véhicule.

6. Véhicule aérien sans pilote selon l'une quelconque des revendications précédentes, **caractérisé en ce qu'il** comprend **une unité Gyroscope (14)** attachée à l'hélice avant (3), qui fournit une référence au système de navigation inertiel du véhicule aérien sans pilote, et permet son positionnement correct et son vol autonome sans support d'éléments de référence externes de type GPS.

7. Véhicule aérien sans pilote selon l'une quelconque des revendications précédentes, **caractérisé en ce qu'il** comprend des **microphones MEMPS (13)** situés sur le véhicule aérien sans pilote pour éliminer et/ou réduire le bruit du groupe moteur (2) au moyen d'une méthode d'interférence acoustique alors que l'hélice arrière (4) tourne à la même vitesse de rotation que l'hélice avant (3) mais avec une phase de 180 degrés de façon à créer un bruit différent.

8. Véhicule aérien sans pilote selon l'une quelconque des revendications précédentes, **caractérisé en ce qu'il** est configuré pour opérer comme suit,
- le véhicule aérien autonome sans pilote est opéré avec une télécommande ou opéré de manière autonome,
- le véhicule aérien autonome sans pilote décolle par le moteur à combustion interne (15), dans lequel le moteur à combustion interne (15) est situé dans l'ensemble moteur (2),
- les extrémités des ailes (12) sont ouvertes de 20-60° et le véhicule décolle en marchant avec un moteur électrique,
- les extrémités des ailes (12) s'étendent sur 180° dans l'axe latéral tandis que le véhicule continue à opérer avec le moteur électrique,
- les extrémités des ailes (12) sont rétractées et le véhicule aérien autonome est inversé après avoir atteint le point cible,
- le ballon (7) est gonflé avec de l'hydrogène qui est stocké dans le réservoir d'hydrogène liquide (6),
- le véhicule aérien sans pilote monte en même temps que le ballon (7) qui est gonflé à l'hydrogène,
- le ballon (7) est éjecté après que le véhicule aérien sans pilote s'élève jusqu'à une altitude où le son du moteur à combustion interne (15) dans l'ensemble moteur (2) ne peut pas être entendu,
- le moteur à combustion interne (15) est opéré et le véhicule est retourné à son emplacement d'origine.

9. Véhicule aérien sans pilote selon l'une quelconque des revendications précédentes, **caractérisé en ce qu'il** comprend un réservoir d'hydrogène liquide (6), dont l'hydrogène peut exploser comme une bombe en cas d'attaque ou de danger.

10. Véhicule aérien sans pilote selon l'une quelconque des revendications précédentes, **caractérisé en ce qu'il** opère au moyen de,
- un arbre de transmission de puissance cylindrique creux (16) connecté au moyeu de l'arbre de sortie du moteur à combustion interne (15) et des paliers de corps rotatifs (20) dans l'ensemble moteur (2) du corps (1),
- une crémaillère de commande (17) qui comprend trois arbres cylindriques non creux nés linéairement sur les paliers du corps rotatif (20) et qui est connectée au moyeu de transmission de puissance de la crémaillère (18),
- un moyeu de transmission de puissance à crémaillère (18) de forme cylindrique, qui est né de manière à autoriser le mouvement radial dans l'ensemble moteur (2) qui se présente sous la forme d'un disque connecté avec un arbre cylindrique creux à l'actionneur linéaire à crémaillère (26),
- un train d'engrenages à crémaillère (19) qui comprend 3 engrenages à crémaillère sur l'arbre connectés à 3 crémaillères de commande (17), et 3 roues dentées qui sont connectées à l'hélice avant (3) et positionnées pour agir ensemble avec lesdites roues dentées,
- des paliers de corps rotatifs cylindriques (20) qui sont montés sur l'ensemble moteur (2) pour permettre leur mouvement radial,
- une came conique (21) sous la forme d'un arbre creux ayant la came conique à sa portion d'extrémité, qui est montée pour autoriser un mouvement linéaire relatif à l'ensemble moteur (2), et qui est connectée aux paliers du corps rotatif (20) de manière à tourner avec lesdits paliers,
- un suiveur de came conique (22) qui est en contact avec la came conique (21) et qui a une bille amovible à son extrémité pour permettre le mouvement,
- un arbre suiveur de came (23) comme un arbre cylindrique monté linéairement amovible à la roue dentée du train d'engrenages à crémaillère (19), qui est connecté à l'hélice avant (3) qui à son tour est connectée au suiveur de came conique (22),
- un engrenage suiveur de came (24) sous la forme d'une roue dentée connectée à l'arbre suiveur de came (23),
- un engrenage de fermeture d'hélice (25) qui est placé de manière décalée axialement par rapport à l'engrenage suiveur de crémaillère (24) qui est connecté à l'hélice avant (3),
- un actionneur linéaire à crémaillère (26) connecté au corps (1), qui a un arbre de sortie cylindrique creux connecté à travers le moyeu de transmission de puissance à crémaillère (18),
- un actionneur linéaire à came conique (27) connecté au corps (1), qui a un arbre de sortie cylindrique connecté à travers le moyeu à la came conique (21).

11. Véhicule aérien sans pilote selon l'une quelconque des revendications précédentes, qui comprend
- un cylindre intérieur (29) qui constitue la portion intérieure du mécanisme et qui a des paliers à glissement linéaire (28) et qui est situé sur le réservoir d'hydrogène liquide (6),
- un cylindre extérieur (30) qui agit sur le cylindre intérieur (29) et permet de changer la position du centre de gravité, et se déplace vers le corps (1) en se déplaçant sur le cylindre intérieur (29) afin de décaler le centre de gravité vers la section avant du véhicule et s'éloigne du corps afin de reculer le centre de gravité.
- un moteur à courant continu (32) qui est fixé avec l'arrêt de moteur (31) au cylindre extérieur et qui entraîne l'arbre à vis (34) et détermine la position du cylindre intérieur (29) et du cylindre extérieur (30) relativement l'un à l'autre,
- Un coupleur (33) qui minimise l'espace radial et transmet le couple entre le moteur à courant continu (32) et l'arbre à vis (34).
- un écrou d'arbre à vis (35) qui permet de traduire le mouvement de l'arbre à vis (34) à mouvement rotatif en un mouvement linéaire,
- une douille d'écrou d'arbre à vis (36) ayant un écrou d'arbre à vis (35) monté dans le cylindre intérieur (29),
**caractérisé en ce qu'il** comprend un mécanisme d'équilibrage de charge (37).

12. Véhicule aérien sans pilote selon l'une quelconque des revendications précédentes, **caractérisé en ce qu'**il comprend
- un échangeur de chaleur (44) sous la forme d'un cylindre creux connecté au corps (1) dans l'ensemble moteur (2),
- un tube enroulé hélicoïdal (43) qui comprend un tube étanche soudé sous forme hélicoïdale à l'intérieur de l'échangeur de chaleur (44),
- une vanne d'entrée d'hydrogène étanche à haute pression (39) fixée à l'encoche ouverte à l'extrémité du tube enroulé hélicoïdal (43),
- une vanne de sortie d'hydrogène étanche à haute pression (40) fixée à l'encoche ouverte à l'extrémité du tube enroulé hélicoïdal (43),
- une vanne d'entrée d'huile (41), étanche aux hautes pressions et qui est fixée avec la vis sur l'échangeur de chaleur (44),
- une vanne de sortie d'huile (42), étanche aux hautes pressions et qui est fixée avec la vis sur l'échangeur de chaleur (44).

13. Véhicule aérien sans pilote selon l'une quelconque des revendications précédentes, **caractérisé en ce qu'il** comprend des couvercles de ballon (45) qui seront ouverts lorsque les ballons (7) doivent être activés, où lesdits couvercles sont situés entre les ballons (7) qui ont été compressés et pliés et empilés successivement.

14. Véhicule aérien sans pilote selon l'une quelconque des revendications précédentes, **caractérisé en ce qu'il** comprend
- un superchargeur (46) connecté au corps (1) dans l'ensemble moteur (2),
- un arbre d'entraînement principal cylindrique (50) avec une roue dentée aux extrémités de celui-ci qui est monté sur le superchargeur (46), pour autoriser un mouvement radial dudit arbre,
- un orifice d'entrée d'air (52) avec une encoche ouverte situé sur le superchargeur (46),
- les engrenages de transmission du superchargeur (51) qui sont formés d'une roue dentée couplée à l'arbre d'entraînement du piston (54),
- un orifice de sortie d'air (53) avec une encoche ouverte situé sur le superchargeur (46),
- un arbre d'entraînement de piston (54) sous la forme d'un arbre cylindrique attaché au superchargeur (46), de telle sorte qu'il puisse se déplacer dans un mouvement radial,
- un piston rotatif à quatre lobes (49) connecté à l'arbre d'entraînement du piston (54) qui consiste en quatre lobes dans la chambre à la couche la plus haute, qui a la pression d'air la plus élevée dans le superchargeur (46),
- un piston rotatif à trois lobes (48) connecté à l'arbre d'entraînement du piston (54) qui consiste en trois lobes dans la chambre à la deuxième couche dans le superchargeur (46),
- un piston rotatif à deux lobes (47) connecté à l'arbre d'entraînement du piston (54) qui consiste en deux lobes dans la chambre à la couche d'entrée dans le superchargeur (46),
- une ouverture de passage d'air (55) ayant un certain diamètre située sur les chambres le long du même axe dans le superchargeur (46).

15. Véhicule aérien sans pilote selon l'une quelconque des revendications précédentes, **caractérisé en ce qu'il** peut maintenir sa position sous des conditions de vent léger pendant son opération lorsqu'il est suspendu dans l'air au moyen du ballon (7), en faisant marcher les hélices arrière (4) avec de l'électricité et en activant les stabilisateurs (10).
